# EUROPÄISCHE PATENTANMELDUNG

(11) **EP 4 275 798 A1**
(43) Veröffentlichungstag der Anmeldung: **15.11.2023**
(21) Anmeldenummer: 23172090.5
(22) Anmeldetag: 08.05.2023
(51) Int. Cl.: B05B 13/02, B21J 15/32, B23P 19/00, B05C 13/00, B23P 19/06, B65G 51/00

(54) **MONTAGEWERKZEUG UND MONTAGESYSTEM ZUM VERBINDEN VON KOMPONENTEN**

(30) Priorität: 09.05.2022 DE 102022111519
(71) Anmelder: Premium AEROTEC GmbH, 86179 Augsburg (DE)
(72) Erfinder: Niedermair, Matthias, 86179 Augsburg (DE); Kiefer, Lucas, 86179 Augsburg (DE); Kugelmann, Tobias, 86179 Augsburg (DE); Wickenburg, Markus, 86179 Augsburg (DE)
(74) Vertreter: LKGLOBAL Lorenz & Kopf Patentanwalt Attorney at Law PartG mbB

(57) **Zusammenfassung**

Es ist ein Montagesystem (1) mit einer Dichtmittelauftragstation (200) und einem Montagewerkzeug (300) beschrieben. Das Montagesystem dient dazu, zwei oder mehrere Komponenten miteinander zu verbinden. Die Dichtmittelauftragstation trägt ein Dichtmittel auf einen Verbinder auf. Die Dichtmittelauftragstation ist in einem Zuführsystem für die Verbinder angeordnet. Die mit Dichtmittel beaufschlagten Verbinder werden an das Montagewerkzeug (300) weitergegeben. Das Montagewerkzeug (300) enthält eine Bohrspindel (311), in welcher ein Verbinder (215) und ein Bohrer (315) axial miteinander ausgerichtet werden können, damit die Bohrspindel (311) mit einer linearen Bewegung entlang einer Bearbeitungsachse (319) sowohl ein Loch in die zu verbindenden Komponenten bohren, als auch den Verbinder (215) in dem gebohrten Loch positionieren kann. Für diese Arbeitsschritte bewegt sich die Bohrspindel lediglich entlang der Bearbeitungsachse (319), so dass für diese Arbeitsschritte ein Linearantrieb verwendet werden kann.

## Beschreibung

### Technisches Gebiet

Die vorliegende Beschreibung betrifft Fertigungstechnik, insbesondere automatisierte Maschinen, welche in einem Fertigungsprozess verwendet werden können. Insbesondere betrifft die Beschreibung eine Dichtmittelauftragstation und ein Montagewerkzeug sowie ein Montagesystem, welches eine solche Dichtmittelauftragstation und/oder ein solches Montagewerkzeug aufweist.

### Technischer Hintergrund

Moderne Montagevorgänge zeichnen sich dadurch aus, dass oftmals manuelle Montageprozesse durch eine automatisierte Lösung ersetzt werden. Die automatisierte Lösung sieht üblicherweise vor, dass entsprechende Maschinen zum Einsatz kommen, welche die auszuführenden Schritte in einer vorab definierten Reihenfolge ausführen.

Maßgebliche Kriterien für die Bewertung einer automatisierten Lösung in einem Montageprozess sind unter anderem die Stabilität des automatisierten Prozesses, die Reproduzierbarkeit der einzelnen Arbeitsschritte und der Arbeitsergebnisse sowie die Nachweisbarkeit der erreichten Qualität in den automatisierten Prozessen, beispielsweise mittels einer integrierten Qualitätskontrolle.

Im Vergleich zu einem manuell durchgeführten Montageprozess kann eine automatisierte Lösung zu einer Verbesserung der Qualität, einer gesunkenen Durchlaufzeit und einer verbesserten Reproduzierbarkeit führen. Nichtsdestotrotz besteht auch bei automatisierten Montageprozessen Verbesserungspotenzial durch Optimierung einzelner Arbeitsschritte und durch Anpassung der verwendeten Werkzeuge.

### Beschreibung

Es kann daher als Aufgabe betrachtet werden, die automatisierte Durchführung eines Prozesses zum Verbinden von zwei Komponenten mit einem Montagesystem zu verbessern.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Im Zusammenhang mit dieser Beschreibung wird eine Dichtmittelauftragstation und ein Montagewerkzeug beschrieben. Die Dichtmittelauftragstation und das Montagewerkzeug können gemeinsam in einem Montagesystem verwendet werden. Die Dichtmittelauftragstation und das Montagewerkzeug können aber auch getrennt voneinander verwendet werden. So kann die Dichtmittelauftragstation auch mit einem anderen Montagewerkzeug verwendet werden. Umgekehrt kann auch das Montagewerkzeug mit oder ohne Dichtmittelauftragstation verwendet werden.

In der Beschreibung werden sowohl die Dichtmittelauftragstation als auch das Montagewerkzeug beschrieben, weil diese beiden Einheiten miteinander interagieren können und weil Funktionen der einen Einheit teilweise mit Bezug zu Funktionen der anderen Einheit beschrieben sind. Insofern sind im Fortgang der Beschreibung sowohl die Dichtmittelauftragstation und das Montagewerkzeug beschrieben, weil es dem Verständnis des Gesamtkontexts dient.

Zum besseren Verständnis wird einleitend eine Dichtmittelauftragstation beschrieben, welche zusammen mit dem weiter unten beschriebenen Montagesystem verwendet werden kann.

Gemäß einem ersten Aspekt ist eine Dichtmittelauftragstation zum Beaufschlagen eines Verbinders mit Dichtmittel zum Fügen eines Werkstücks angegeben. Die Dichtmittelauftragstation weist eine Zuführung, eine Abführung, eine Halteeinheit, einen Greifer, eine Antriebseinheit und eine Dichtmittelauftragseinheit auf. Die Zuführung ist ausgestaltet, der Dichtmittelauftragstation einen Verbinder zuzuführen. Die Abführung ist ausgestaltet, den Verbinder von der Dichtmittelauftragstation abzuführen. Die Halteeinheit ist angeordnet, den Verbinder nach dem Zuführen über die Zuführung zu halten. Der Greifer ist ausgestaltet, den von der Halteeinheit gehaltenen Verbinder zu greifen. Die Antriebseinheit ist ausgestaltet, den Greifer um eine Drehachse zu drehen. Die Dichtmittelauftragseinheit ist ausgestaltet, ein Dichtmittel auf den Verbinder aufzutragen, während die Antriebseinheit den Greifer um die Drehachse dreht. Die Halteeinheit ist bewegbar, um eine Abführöffnung freizugeben, nachdem die Dichtmittelauftragseinheit den Verbinder mit einem Dichtmittel beaufschlagt hat.

Die Dichtmittelauftragsstation kann beispielsweise in der Fertigung von Werkstücken verwendet werden, insbesondere für Fertigungsschritte, die eine Vorverarbeitung von Verbindern enthalten. Vorliegend geht es um das Auftragen von Dichtmitteln auf einen Verbinder, welcher in einem anschließenden Verarbeitungsschritt verwendet wird, um zwei Komponenten zu einem Bauteil zu verbinden bzw. zu fügen. Der Verbinder kann beispielsweise ein Schlagniet oder ein Schraubniet sein, der mit Dichtmittel beaufschlagt wird, bevor er in eine Öffnung der Komponenten eingeführt wird, um diese miteinander zu verbinden und die Verbindungsstelle dichten abzuschließen.

Bei den Komponenten und dem Bauteil kann es sich beispielsweise um Rumpfbauteile von Luftfahrzeugen handeln, die so miteinander verbunden werden müssen, dass sie an der Verbindungsstelle luftdicht verbunden sind. Dies gilt auch für die Stellen, an denen die Verbinder angeordnet sind. Aus diesem Grund werden die Verbinder mit einem Dichtmittel beaufschlagt, bevor sie in die entsprechenden Öffnungen der Komponenten eingeführt werden.

Als Dichtmittel kann beispielsweise ein Zwei-Komponenten-Verbinder verwendet werden, welcher trotz hoher Härte eine hohe Elastizität hat und seine Festigkeitseigenschaften über einen vergleichsweise großen Temperaturbereich beibehält, beispielsweise von -60°C bis +100°C.

Die Zuführung und die Abführung können als Einheitsschlauchsystem ausgestaltet sein, über welche ein Verbinder mittels Vakuum oder Druckluft transportiert werden kann. Das Transportieren von Verbindern über ein Schlauchsystem ist grundsätzlich bekannt. Auf Details hiervon wird an dieser Stelle nicht weiter eingegangen. Der Verbinder wird über das Schlauchsystem transportiert und nimmt dabei eine bestimmte Orientierung ein. Ein Verbinder in Form eines Niets wird bevorzugt mit dem Nietkopf voraus (in Bewegungsrichtung) transportiert. Somit schlägt der Verbinder mit dem Kopf auf der Halteeinheit auf und wird dann in dieser Orientierung von dem Greifer gegriffen. Für den Weitertransport über die Abführöffnung behält der Verbinder diese grundsätzliche Orientierung bei.

Die Abführöffnung ist bevorzugt entlang einer Zuführrichtung des Verbinders angeordnet, so dass der Verbinder, nachdem er über die Zuführung eingebracht und von dem Greifer gehalten und gedreht wurde, in die Abführöffnung übergeht, sobald die Halteeinheit die Abführöffnung freigibt. Dies hat den Vorteil, dass der Verbinder aus der Zuführung entnommen wird, mit Dichtmittel beaufschlagt wird, und seinen Weg in Richtung der Weiterverarbeitung fortsetzt. Es sind keine komplexen Weitergabemechanismen nötig. Vielmehr wird der Verbinder aus der Zuführung ausgegeben, von der Halteeinheit zunächst in seiner Bewegung gestoppt und dann von dem Greifer gegriffen und vor der Dichtmittelauftragseinheit in eine Rotationsbewegung versetzt. Hierbei wird der Verbinder bevorzugt um 360° gedreht, so dass er in seiner gesamten Umfangsrichtung mit Dichtmittel beaufschlagt wird. Für diesen Ablauf ist lediglich ein Antrieb nötig, der den Greifer rotiert. Der Greifer muss nicht zwingend eine translatorische Bewegung ausführen.

Die Halteeinheit kann einen von zwei Zuständen einnehmen: in einem ersten Zustand versperrt die Halteeinheit die Abführöffnung und hält einen Verbinder, der aus der Zuführung ausgegeben wird. In dieser Position des Verbinders kann der Verbinder von dem Greifer gegriffen und rotiert werden; in einem zweiten Zustand gibt die Halteeinheit die Abführöffnung frei, beispielsweise indem die Halteeinheit eine Schwenkbewegung oder eine lineare Bewegung ausführt, wodurch die Abführöffnung freigegeben wird; der Verbinder kann dann in die Abführöffnung gegeben werden und wird weitertransportiert für die nächsten Verarbeitungsschritte.

Die Dichtmittelauftragseinheit trägt das Dichtmittel auf den Verbinder auf, beispielsweise indem das Dichtmittel aus einer Öffnung der Dichtmittelauftragseinheit herausgedrückt oder gesprüht wird. Hierzu kann die Dichtmittelauftragseinheit auf einen vorgebbaren Abstand zu der Oberfläche des Verbinders bewegt werden. Das Dichtmittel wird bevorzugt in einem flüssigen Zustand auf einen Bereich der Oberfläche des Verbinders aufgetragen, beispielsweise mittels einer an der Dichtmittelauftragseinheit angeordneten Öffnung oder Düse. Indem der Verbinder mit dem Greifer in Rotation versetzt wird, wird der Verbinder in Umfangsrichtung bevorzugt um den gesamten Umfang und über einen bestimmten Bereich in Längsrichtung mit Dichtmittel beaufschlagt.

Gemäß einer Ausführungsform weist die Dichtmittelauftragstation weiterhin eine Übergabestation auf, welche an einem Auslassende der Zuführung angeordnet und mit dem Greifer mechanisch gekoppelt ist. Die Antriebseinheit ist so mit der Übergabestation gekoppelt, dass eine Bewegung der Antriebseinheit auf die Übergabestation übertragen wird, wodurch der Greifer um die Drehachse gedreht wird.

Beispielsweise ist die Antriebseinheit über einen Antriebsriemen mit der Übergabestation gekoppelt. Die Antriebseinheit kann beispielsweise ein Elektromotor oder ein anderweitig geeigneter Antrieb sein. Die Übergabestation ist drehbar an einem Ende der Zuführung angeordnet.

Der Greifer kann beispielsweise so gedreht werden, dass er in einem Verarbeitungsschritt (d.h., beim Beaufschlagen eines Verbinders mit Dichtmittel) eine Drehung um 360° im Uhrzeigersinn ausführt und in einem anschließenden Verarbeitungsschritt (d.h., beim Beaufschlagen des nächsten Verbinders mit Dichtmittel) eine Drehung um 360° entgegen dem Uhrzeigersinn ausführt. Somit kann die Komplexität des Drehmechanismus der Übergabestation und des Greifers reduziert werden, da auf fehleranfällige Komponenten, die eine unbegrenzte Drehung in dieselbe Richtung ermöglichen, verzichtet werden kann.

Gemäß einer weiteren Ausführungsform ist die Dichtmittelauftragseinheit in radialer Richtung des Verbinders bewegbar, um einen vorgebbaren Abstand zu dem Verbinder einzunehmen.

Somit kann die Dichtmittelauftragseinheit in einen geeigneten Abstand zu der Oberfläche des Verbinders gebracht werden, bevor diese Oberfläche mit Dichtmittel beaufschlagt wird. Beispielsweise kann dieser Abstand in Abhängigkeit des verwendeten Dichtmittels und in Abhängigkeit der Größe des mit Dichtmittel beaufschlagten Oberflächenbereichs eingestellt oder variiert werden.

Gemäß einer weiteren Ausführungsform weist die Dichtmittelauftragstation eine Sensoreinheit auf, welche ausgestaltet ist, den Abstand zwischen der Dichtmittelauftragseinheit und dem Verbinder bzw. dessen Oberfläche zu erfassen.

Der erfasste Abstand kann an eine Steuerung der Dichtmittelauftragstation übermittelt werden, wodurch die Steuerung in der Lage ist, den Abstand zwischen der Dichtmittelauftragseinheit und der Oberfläche des Verbinders auf einen gewünschten Wert einzustellen, indem ein Antrieb der Dichtmittelauftragseinheit entsprechend angesteuert wird.

Gemäß einer weiteren Ausführungsform hat der Greifer mindestens zwei Greiffinger, welche auf eine Größe des Verbinders einstellbar sind, um Verbinder mit unterschiedlichen Ausmaßen greifen zu können.

Die mindestens zwei Greiffinger sind ausgestaltet, eine Greifbewegung auszuführen. Zum Ausführen der Greifbewegung ist ein Aktuator (z.B. ein elektromechanischer/hydraulischer/pneumatischer Antrieb) mit dem Greifer und den Greiffingern gekoppelt. Bei der Greifbewegung bewegen sich die Greiffinger aufeinander zu. Der Aktuator kann so gesteuert werden, dass er bei Erreichen einer vorgegebenen Greifkraft, die auf den Verbinder aufgebracht wird, die Greifbewegung anhält. Die Greiffinger können an einer Greiffläche beschichtet oder vorbereitet sein, um den Verbinder so zu greifen, dass der Verbinder für die Dauer der ausgeführten Verarbeitungsschritte sicher zwischen den Greiffingern gehalten wird. Die Greiffinger können auch mit Hilfe eines mechanischen Feder- oder Spannelements aus einer geöffneten Position in die Greifposition gebracht werden. Somit ist ein Aktuator nur nötig, um die Greiffinger zu öffnen, wohingegen die Greiffinger die Greifbewegung durch das Feder- oder Spannelement ausführen, wenn der Aktuator die Greiffinger nicht mehr in dem geöffneten Zustand hält.

Gemäß einer weiteren Ausführungsform hält der Greifer den Verbinder so, dass eine Mittelachse des Verbinders mit der Drehachse des Greifers zusammenfällt.

Somit erfährt der Verbinder keine translatorische Verschiebung, wenn der Greifer sich um die Drehachse dreht. Der Verbinder bleibt vielmehr an derselben Stelle und wird einzig um seine Mittelachse gedreht, welche mit der Drehachse des Greifers ausgerichtet ist. Wenn die Dichtmittelauftragseinheit einmal einen vorgegebenen Abstand zu der Oberfläche des Verbinders eingenommen hat, dann wird dieser Abstand beibehalten, während der Greifer sich mit dem Verbinder dreht, was insbesondere für rotationssymmetrische Verbinder gilt. Das Dichtmittel wird also über den gesamten Umfang des Verbinders aus demselben Abstand aufgetragen, wodurch das Dichtmittel in gleichmäßiger Menge entlang des gesamten Umfangs aufgetragen wird.

Gemäß einer weiteren Ausführungsform ist die Halteeinheit quer zu einer Transportrichtung des Verbinders bzw. zu einer Längsachse des Verbinders, wenn sich dieser in der von dem Greifer gehaltenen Position befindet, bewegbar, um die Abführöffnung freizugeben.

Die Halteeinheit kann beispielsweise aus einem ersten Zustand, in welchem sie die Abführöffnung versperrt, in einen zweiten Zustand, in welchem sie die Abführöffnung freigibt, bewegt werden. Nach dem Abtransportieren des mit Dichtmittel beaufschlagten Verbinders wird die Halteeinheit üblicherweise aus dem zweiten Zustand zurück in den ersten Zustand bewegt. Hierfür kann eine elektromechanische Antriebseinheit, eine pneumatische Einheit, eine hydraulische Einheit, eine magnetische Einheit oder ein andersartiger Antrieb verwendet werden. Die Halteeinheit kann bei der Bewegung aus dem ersten Zustand in den zweiten Zustand eine lineare Bewegung oder eine Schwenkbewegung ausführen.

In einem Beispiel weist die Halteeinheit eine Öffnung auf, die in Überdeckung mit der Abführöffnung der Dichtmittelauftragstation gebracht werden kann. In diesem Zustand befindet sich die Öffnung der Halteeinheit unter dem Verbinder und der Verbinder wird nicht mehr in Position gehalten und fällt durch die Öffnung der Halteeinheit in die Abführöffnung. Die Öffnung in der Halteeinheit kann insbesondere denselben Querschnitt aufweisen wie die Abführöffnung.

Gemäß einem weiteren Aspekt ist ein Montagewerkzeug zum Verbinden von zwei Komponenten angegeben. Das Montagewerkzeug weist einen Endeffektor auf. Der Endeffektor weist eine Bohrspindel mit einem Bohrer und einen Setzfinger auf. Die Bohrspindel ist ausgestaltet, den Bohrer um eine Bearbeitungsachse in Rotation zu versetzen. Der Setzfinger ist ausgestaltet, einen Verbinder aus einer Zuführung aufzunehmen und in eine Bearbeitungsposition zu bringen. Die Bohrspindel ist ausgestaltet, in Längsrichtung entlang der Bearbeitungsachse bewegt zu werden. Der Setzfinger ist ausgestaltet, um ein Gelenk bewegt zu werden und den Verbinder so zu positionieren, dass der Verbinder axial mit dem Bohrer ausgerichtet ist. Die Bohrspindel ist ausgestaltet, durch eine Bewegung entlang der Bearbeitungsachse den Verbinder in die Komponenten einzubringen und diese dadurch miteinander zu verbinden.

Das hier beschriebene Montagewerkzeug zeichnet sich durch seine Einfachheit aus. Beispielsweise wird die Bohrspindel entlang einer Bearbeitungsachse linear bewegt. Dabei kann die Bohrspindel in beide Richtungen entlang der Bearbeitungsachse bewegt werden, beispielsweise von einem elektromechanischen Antrieb wie einem Elektromotor oder anderen Antriebsarten, welche hierin beschrieben sind (pneumatisch, hydraulisch, magnetisch, etc.).

Die Bohrspindel kann also entlang der Bearbeitungsachse auf die zwei zu verbindenden Komponenten zubewegt oder von ihnen wegbewegt werden. Somit kann die Bohrspindel so bewegt werden, dass der Bohrer ein Loch in die Komponenten bohrt. Im Anschluss an den Bohrvorgang wird der Bohrer zurückgeführt, d.h. die Bohrspindel wird von den gebohrten Komponenten wegbewegt. Während des Bohrvorgangs führt der Bohrer wie üblich eine Rotation um seine Längsachse aus. Die Längsachse des Bohrers fällt zusammen mit der Bearbeitungsachse der Bohrspindel, womit der Bohrer während des Bohrvorgangs um die Bearbeitungsachse rotiert.

Die Bohrspindel bewegt sich bevorzugt so, dass der Bohrer beide zu verbindenden Komponenten vollständig durchdringt. Anschließend wird der Bohrer durch eine entgegengerichtete Bewegung entlang der Bearbeitungsachse aus dem gebohrten Loch herausgeführt und nimmt einen vorgegebenen Abstand zu den gebohrten Komponenten ein.

Nun schwenkt der Setzfinger mit dem aufgenommenen Verbinder in die Bearbeitungsposition. Die Bearbeitungsposition des Verbinders zeichnet sich dadurch aus, dass in der Bearbeitungsposition der Verbinder axial mit dem Bohrer ausgerichtet ist. Das bedeutet, dass eine Mittelachse des Verbinders mit der Mittelachse des Bohrers zusammenfällt. Der Bohrer und der Verbinder sind zwar entlang der Bearbeitungsachse voneinander beabstandet bzw. entlang der Bearbeitungsachse hintereinander angeordnet, sie befinden sich allerdings beide auf der Bearbeitungsachse. Im Ergebnis ist der Verbinder in dieser Position auch mit dem von dem Bohrer gebohrten Loch ausgerichtet.

Der Verbinder ist beispielsweise mindestens abschnittsweise (in Längsrichtung) kreisförmig oder rotationssymmetrisch und der kreisförmige oder rotationssymmetrische Längsabschnitt hat denselben oder einen geringfügig größeren Durchmesser als der Bohrer. In der Bearbeitungsposition ist der Verbinder damit auch mit dem von dem Bohrer angefertigten Loch in den Komponenten ausgerichtet. Wird nun die Bohrspindel wieder entlang der Bearbeitungsachse in Richtung der zu verbindenden Komponenten bewegt, kann der Verbinder in das von dem Bohrer gebohrte Loch eingeführt werden.

Dieser Ansatz erlaubt es, mit einer einzelnen Bohrspindel und mit einer linearen Bewegung entlang einer Bearbeitungsachse in beide Richtungen sowohl ein Loch in die zu verbindenden Komponenten zu bohren als auch einen Verbinder in das von dem Bohrer gebohrte Loch einzusetzen. Somit wird die mechanische Komplexität des Aufbaus und die Bearbeitungszeit stark reduziert. Wenn der Setzfinger den Verbinder in die Bearbeitungsposition einschwenkt, nimmt die Bohrspindel einen entsprechenden Abstand zu den zu verbindenden Komponenten ein, damit der Setzfinger mit dem Verbinder zwischen den Bohrer und die zu verbindenden Komponenten eingeschwenkt werden kann.

Das hier beschriebene Montagewerkzeug kann in einem System zusammen mit der Dichtmittelauftragstation verwendet werden. Die Dichtmittelauftragstation stellt einen mit Dichtmittel beaufschlagten Verbinder an das Montagewerkzeug bereit, beispielsweise über eine Zuführung, die als Vakuum- oder Drucklufttransportschlauch ausgestaltet ist. Der Verbinder wird dann in dem Montagewerkzeug wie beschrieben verwendet, um miteinander zu verbindende Komponenten zu verbinden. Das Montagewerkzeug kann aber auch anderweitig mit einem Verbinder versorgt werden, hierzu ist nicht unbedingt die weiter oben beschriebene Dichtmittelauftragstation notwendig.

Gemäß einer weiteren Ausführungsform ist der Setzfinger über ein Gelenk mit der Bohrspindel verbunden, wobei das Gelenk ausgestaltet ist, dass der Setzfinger in die Bearbeitungsposition vor den Bohrer geschwenkt und aus der Bearbeitungsposition herausgeschwenkt werden kann.

Das Gelenk, welches den Setzfinger mit der Bohrspindel verbindet, ist beispielsweise ein Schwenk- oder Rotationsgelenk. Das Gelenk ist beispielsweise an einem Gehäuse der Bohrspindel angeordnet. Wenn der Bohrer ein Loch in die zu verbindenden Komponenten bohrt, ist der Setzfinger seitlich aus der Bearbeitungsposition herausgeschwenkt. In diesem Zustand kann der Setzfinger einen Verbinder von dem Zugführer aufnehmen. Nach dem Bohren des Lochs bewegt sich die Bohrspindel weg von den zu verbindenden Komponenten und der Setzfinger mitsamt dem aufgenommenen Verbinder bewegt sich vor den Bohrer.

Der Setzfinger kann in dem Gelenk mittels eines Aktuators geschwenkt werden. Bei dem Aktuator kann es sich um einen Antrieb handeln, wie er weiter oben mit Bezug auf die lineare Bewegung der Bohrspindel entlang der Bearbeitungsachse beschrieben wurde.

Gemäß einer weiteren Ausführungsform erlaubt das Gelenk eine Schwenkbewegung um eine einzelne Achse.

Somit hat der Setzfinger einen einfachen strukturellen Aufbau, weil bei der Schwenkbewegung in die Bearbeitungsposition und aus der Bearbeitungsposition heraus keine komplexe Bewegung ausgeführt werden muss. Es ist jedoch selbstverständlich möglich, dass der Setzfinger bei dieser Bewegung in die Bearbeitungsposition oder aus der Bearbeitungsposition heraus auch ein anderes Bewegungsmuster ausführt, welches an die jeweiligen Erfordernisse angepasst ist.

Gemäß einer weiteren Ausführungsform liegen der Verbinder und der Bohrer in der Bearbeitungsposition auf einer gemeinsamen Achse und sind auf dieser gemeinsamen Achse hintereinander angeordnet.

Gerade durch diese relative Anordnung von Verbinder und Bohrer ist es möglich, dass sowohl der Bohrvorgang als auch der Setzvorgang mit derselben linearen Bewegung des Endeffektors auf das bearbeitete Werkstück hin (und davon weg) ausgeführt werden können. Der Bohrer und der Verbinder sind beispielsweise so zueinander angeordnet, dass eine senkrechte Projektion (entlang der Bearbeitungsachse 319) des Bohrers und des Verbinders auf die Werkstückoberfläche übereinanderliegen bzw. an derselben Stelle liegen.

Gemäß einer weiteren Ausführungsform verläuft die gemeinsame Achse des Verbinders und des Bohrers parallel zu der Bearbeitungsachse oder fällt mit der Bearbeitungsachse zusammen.

Gemäß einer weiteren Ausführungsform weist das Montagewerkzeug weiterhin eine Kinematik in Form eines Schwenkarms auf, wobei die Bohrspindel an der Kinematik angeordnet ist.

Die Kinematik kann beispielsweise als sogenannter Sechs-Achs-Schwenkarm ausgestaltet sein. Mithilfe der Kinematik kann die Bohrspindel entlang der Oberfläche der zu verbindenden Komponenten bewegt werden, um nach dem Setzen eines Verbinders in ein Bohrloch die Bohrspindel an eine neue Arbeitsposition zu bringen, an welcher ein Loch gebohrt und ein Verbinder gesetzt werden soll.

Auch wenn die Bohrspindel an der Kinematik angeordnet ist, um an eine neue Arbeitsposition gebracht zu werden, so führt die Bohrspindel an den jeweiligen Arbeitspositionen lediglich eine Bewegung entlang der Bearbeitungsachse aus. Zum Bohren des Lochs wird die Bohrspindel entlang der Bearbeitungsachse auf die Komponenten zu bewegt, wird anschließend von den Komponenten wegbewegt, sodann wird der Setzfinger mit dem Verbinder in die Bearbeitungsposition geschwenkt und die Bohrspindel wird erneut entlang der Bearbeitungsachse auf die Komponenten zu bewegt, um den Verbinder in das gebohrte Loch einzusetzen. Anschließend wird die Bohrspindel von dem eingesetzten Verbinder wegbewegt, beispielsweise indem die Bohrspindel zunächst entlang der Bearbeitungsachse von den Komponenten wegbewegt wird und dann die Bohrspindel mithilfe der Kinematik an die nächste Arbeitsposition gebracht wird.

Gemäß einer weiteren Ausführungsform weist das Montagewerkzeug eine Steuerung und eine Sensoreinheit auf. Die Sensoreinheit ist ausgestaltet, eine relative Position der Bohrspindel bezogen auf die zu verbindenden zwei Komponenten zu erfassen und an die Steuerung zu übertragen. Die Steuerung ist ausgestaltet, eine Bewegung der Bohrspindel basierend auf der erfassten relativen Position der Bohrspindel bezogen auf die zu verbindenden Komponenten zu veranlassen.

Die Sensoreinheit kann beispielsweise einen oder mehrere optische Sensoren aufweisen, welche an der Bohrspindel angeordnet sind. Alternativ können die Sensoren auch an anderen Elementen des Montagewerkzeugs angeordnet sein. Wenn die Sensoren an der Bohrspindel angeordnet sind, mag es jedoch einfacher sein, die relative Position der Bohrspindel zu den zu verbindenden Komponenten zu erfassen, weil die relative Position der Sensoren zu der Bohrspindel feststeht. Die optischen Sensoren sind ausgestaltet, ihr Umfeld zu erfassen. Über bestimmte Marker an den zu verbindenden Komponenten kann die relative Position der Bohrspindel zu den zu verbindenden Komponenten erfasst werden.

Diese relative Position wird an die Steuerung weitergegeben. Die Steuerung ist ausgestaltet, basierend auf der relativen Position von Bohrspindel und Werkstück (zu verbindende Komponenten) einen Antrieb zum Positionieren der Bohrspindel zu steuern. Die Steuerung kann auch ausgestaltet sein, einen Antrieb für die Rotation des Bohrers zu steuern, beispielsweise in Abhängigkeit von dem Abstand zwischen Bohrspindel und Werkstück. Die Steuerung kann ausgestaltet sein, sowohl den Linearantrieb der Bohrspindel für die Bewegung entlang der Bearbeitungsachse zu dem Werkstück oder weg von dem Werkstück als auch die Kinematik zum Bewegen der Bohrspindel an die nächste Arbeitsposition zu steuern.

Wenn das Montagewerkzeug und die Dichtmittelauftragstation zusammen in einem Montagesystem verwendet werden, können die Funktionen der Steuerung der Dichtmittelauftragstation und die Funktionen der Steuerung des Montagewerkzeugs von einer einzelnen Steuerung ausgeführt werden.

Gemäß einem weiteren Aspekt ist ein Montagesystem angegeben. Das Montagesystem weist eine Dichtmittelauftragstation und ein Montagewerkzeug wie hierin beschrieben auf. Bei der Dichtmittelauftragstation kann es sich um die hierin beschriebene Dichtmittelauftragstation handeln.

Die hierin beschriebene Dichtmittelauftragstation und das hierin beschriebene Montagewerkzeug können gemeinsam in einem Montagesystem verwendet werden, um Komponenten miteinander zu verbinden. In der Dichtmittelauftragstation wird ein Dichtmittel auf den Verbinder aufgetragen und der mit Dichtmittel beaufschlagt Verbinder wird an das Montagewerkzeug weitergegeben, um dort in einem Verbindung- oder Fügeprozess von miteinander zu verbindenden Komponenten verwendet zu werden.

Das Montagesystem kann beispielsweise bei der Montage von Luftfahrzeugteilen verwendet werden. Beispielsweise können mehrere einzelne Abschnitte einer Außenhaut eines Luftfahrzeugs mit dem Montagewerkzeug miteinander verbunden werden, wobei mit Dichtmittel beaufschlagte Verbinder aus der hierin beschriebenen Dichtmittelauftragstation verwendet werden. Somit werden nicht nur die zu verbindenden Komponenten mechanisch miteinander verbunden, sondern die Verbindungsstelle wird mit dem Dichtmittel gasdicht und wasserdicht abgeschlossen.

Es wird darauf hingewiesen, dass die Dichtmittelauftragstation auch unabhängig von dem Montagewerkzeug in einem Montagesystem verwendet werden kann, um einen Verbinder mit einem Dichtmittel zu beaufschlagen. Genauso kann auch das Montagewerkzeug unabhängig von der Dichtmittelauftragstation in einem Montagesystem verwendet werden, um zwei oder mehr Komponenten miteinander zu verbinden. Bei diesem Verbindungsvorgang können mit Dichtmittel beaufschlagt Verbinder genauso verwendet werden, wie Verbinder, die nicht mit Dichtmittel beaufschlagt sind. Die Verbinder können grundsätzlich auf beliebige Weise an das Montagewerkzeug übergeben werden.

Gemäß einer Ausführungsform ist die Dichtmittelauftragstation mit dem Montagewerkzeug zum Zuführen eines Verbinders mit einem einzelnen Zuführschlauch verbunden, wobei der einzelne Zuführschlauch ausgestaltet ist, Verbinder mit unterschiedlichen Abmessungen an das Montagewerkzeug zuzuführen.

Weil Verbinder mit unterschiedlichen Abmessungen über den einzelnen Zuführschlauch an das Montagewerkzeug zugeführt werden können, reicht es aus, einen einzelnen Zuführschlauch zu verwenden, um die Dichtmittelauftragstation mit dem Montagewerkzeug zu verbinden. So können beispielsweise Verbinder unterschiedlicher Durchmesser und/oder unterschiedlicher Länge und/oder unterschiedlicher Gestalt (bei einem Lied bezieht sich die Gestalt auf die Form des Schafts und des Kopfes) über den einzelnen Zuführschlauch zugeführt werden. Dies reduziert weiter die Komplexität des Montagesystems, weil nicht für jede Variante des Verbinders ein gesonderter Zuführschlauch vorgesehen ist.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Dichtmittelauftragstation.
- Fig. 2: eine schematische Darstellung eines Montagewerkzeugs.
- Fig. 3: eine schematische Darstellung eines Endeffektors mit Druckfuß.
- Fig. 4: eine schematische Darstellung des Aufbaus eines Montagesystems.
- Fig. 5: eine schematische Darstellung eines Montagesystems.

### Detaillierte Beschreibung von Ausführungsbeispielen

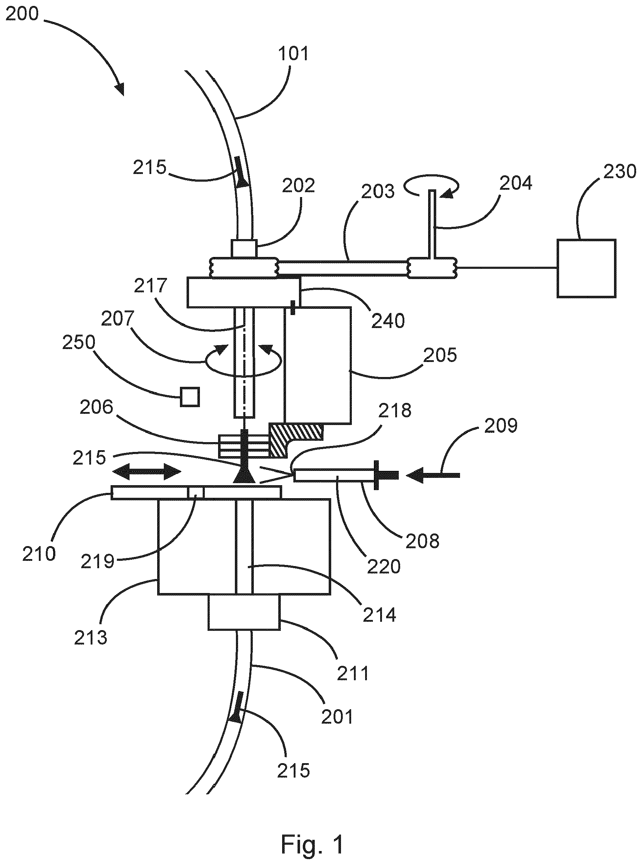

Fig. 1 zeigt eine Dichtmittelauftragstation 200. Die Dichtmittelauftragstation 200 wird über ein Schlauchsystem 101 mit einem Verbinder 215 versorgt. Der Verbinder 215 wird in der Dichtmittelauftragstation 200 den im Folgenden beschriebenen Arbeitsschritten unterzogen und für die weitere Verarbeitung an das Schlauchsystem 201 übergeben.

Die Dichtmittelauftragstation 200 weist zunächst eine Übergabestation 202 auf. Der Verbinder 215 wird der Dichtmittelauftragstation 200 über das Schlauchsystem 101 und die Übergabestation 202 zugeführt. Die Übergabestation 202 bringt den Verbinder 215 in die Dichtmittelauftragstation 200 ein. Die Dichtmittelauftragstation 200 weist eine Rotationseinheit 240 auf, welche mit einem Greifer 205 gekoppelt ist. Die Rotationseinheit 240 kann von einer Antriebseinheit 204 über einen Antriebsriemen 203 in Rotation versetzt werden, wodurch auch der Greifer 205 in eine Rotation um die Drehachse 217 versetzt wird, wobei die Rotation in beide Richtungen 207 um die Drehachse 217 erfolgen kann. Der Greifer 205 weist mehrere Greiffinger 206 auf, welche den Verbinder 215 greifen.

Ein Verbinder 215 wird über das Schlauchsystem 101 und die Übergabestation 202 zugeführt und trifft auf die Halteeinheit 210 auf. Die Halteeinheit 210 kann beispielsweise als Anschlagblech ausgestaltet sein. In dieser Position ist der Verbinder 215 axial mit der Drehachse 217 ausgerichtet, d.h. eine Mittelachse bzw. Längsachse des Verbinders 215 fällt mit der Drehachse 217 zusammen, und der Verbinder wird von den Greiffingern 206 des Greifers 205 gegriffen. Die Antriebseinheit 204 versetzt die Rotationseinheit 240 und den Greifer 205 über den Antriebsriemen 203 in Rotation, wodurch auch der Verbinder 215 ebenfalls um die Drehachse 217 gedreht wird.

Die Funktionen der Dichtmittelauftragstation 200, also beispielsweise die Antriebseinheit 204 sowie der Greifer 205, werden von einer Steuerung 230 gesteuert. Die Steuerung 230 ist aber auch ausgestaltet, eine Bewegung der Halteeinheit 210 sowie die Dichtmittelauftragseinheit 208 zu steuern.

Der Verbinder 215 wird um die Drehachse 217 gedreht. Während der Drehung des Verbinders 215 um die Drehachse 217 wird ein Dichtmittel mit der Dichtmittelauftragseinheit 208 auf einen Bereich der Oberfläche des Verbinders 215 aufgetragen. Zu diesem Zweck kann die Dichtmittelauftragseinheit 208 radial in Richtung des Verbinders 215 bewegt werden und einen vorgegebenen Abstand zu dem Verbinder 215 einnehmen. Das Dichtmittel wird über eine Öffnung oder Düse 218 auf den Verbinder 215 aufgetragen. Hierbei wird das Dichtmittel mit einer weggesteuerten Auspresskraft 209 ausgepresst.

Während das Dichtmittel auf den Verbinder 215 aufgetragen wird, führt der Verbinder 215 bevorzugt eine Drehung um 360° aus, wodurch das Dichtmittel über den gesamten Umfang des Verbinders 215 aufgetragen wird.

Eine Sensoreinheit 250 ist angeordnet, um den Abstand zwischen der Dichtmittelauftragseinheit 208 und dem Verbinder 215 zu erfassen. Die Sensoreinheit 250 kann auch ausgestaltet sein, eine Position und Orientierung des Verbinders 215 zu erfassen, um das Greifen des Verbinders 215 mit dem Greifer 205 zu ermöglichen.

Sobald das Dichtmittel auf den Verbinder 215 aufgetragen ist, ist dieser Arbeitsschritt abgeschlossen und der Verbinder 215 kann weitertransportiert werden. Zu diesem Zweck wird die Halteeinheit 210 bewegt, um die Abführöffnung 214 in dem Montageblock 213 freizugeben. In dem Beispiel der Fig. 1 kann die Halteeinheit 210 nach rechts bewegt werden, um die Öffnung 219 in der Halteeinheit so zu bewegen, dass die Öffnung 219 über der Abführöffnung 214 liegt und der Verbinder 215 in die Übergabeeinheit 211 Feld, wo der Verbinder 215 dem Schlauchsystem 201 zugeführt wird. Die Halteeinheit 210 kann aber auch nach links bewegt werden, um die Abführöffnung 214 freizugeben.

Die Dichtmittelauftragstation 200 ist bevorzugt so eingerichtet, dass die Schwerkraft den Verbinder 215 aus der Übergabestation 202 in die vorgesehene Position auf der Halteeinheit 210 bringt und den Verbinder 215 zu der Übergabeeinheit 211 bringt, sobald die Abführöffnung 214 von der Halteeinheit 210 freigegeben ist.

Zusammenfassend kann die Funktion der Dichtmittelauftragstation wie folgt beschrieben werden: die Verbinder 215 werden innerhalb eines Schlauchsystems 101, 201 entnommen, einer Dichtmittelauftragseinheit 208 übergeben, um den Verbinder 215 mit Dichtmittel 220 zu versehen, und dem Schlauchsystem für den Weitertransport wieder übergeben. In dem Schlauchsystem 101, 201 wird der Verbinder 215 beispielsweise mittels Druckluft zur Dichtmittelauftragsstation 200 befördert und von einem horizontal bewegbaren Schieber (also von der Halteeinheit 210) axial in einer festen Position fixiert. Nun wird der Verbinder 215 mit einem radial greifenden Greifer 205 und dessen Greiffingern 206 (z.B. in Form eines Parallelbackengreifers) gegriffen. Der Greifer 205 ist an einer Rotationseinheit 240 befestigt, welche nun um 360°, mitsamt dem Verbinder 215 und dem Greifer, zu rotieren beginnt. Eine Dichtmittelauftragseinheit 208 wird mittels Sensorik 250 auf den entsprechenden Verbinder 215 zugestellt und nimmt entweder einen vorgegebenen Abstand zu dem Verbinder 215 ein oder liegt auf der Oberfläche des Verbinders 215 auf. Die Dichtmittelauftragseinheit 208 weist beispielsweise eine Dichtmittelkartusche auf, welche mittels eines Motors ausgepresst wird. Das Dichtmittel wird mittels einer Kanüle von der Dichtmittelkartusche aus hin zum Verbinder 215 befördert. Bevorzugt wird das Dichtmittel auf den Verbinder an einem Übergang zwischen dem zylindrischen Schaft und dem Kopf des Verbinders aufgetragen. Somit ist das Dichtmittel an dieser Stelle bei einem Weitertransport durch das Schlauchsystem 201 gegen Abrieb geschützt. Das Auftragen des Dichtmittels startet mit Beginn der Rotation 207 um die Drehachse 217 und endet nach Abschluss der Rotation. Der Greifer 205 gibt den Verbinder 215 nun frei, indem die Greiffinger gelöst werden, damit der Verbinder 215 wieder frei auf dem horizontal bewegbaren Schieber 210 verbleibt. Der Schieber 210 wird nun horizontal verschoben und der Verbinder 215 fällt axial zurück in das Schlauchsystem 201. Hierbei wird der Verbinder 215 zu anfangs der Vertikalbewegung durch die Öffnung 219 und Abführöffnung 214 vom Greifer 205 mit den montierten Greiffingern 206 axial geführt.

Nachdem das Dichtmittel auf den Verbinder aufgetragen wird und nicht auf das zu bearbeitende Werkstück, kann das Dichtmittel gezielt und sparsam aufgetragen werden und es wird sichergestellt, dass das Dichtmittel sich auch an der Stelle befindet, an welcher die Oberfläche des Verbinders 215 mit dem bearbeiteten Werkstück in Kontakt steht.

Die hier beschriebene Dichtmittelauftragstation 200 wird also in einem mit Druckluft beaufschlagten Schlauchsystem 101, 201 positioniert und ein Verbinder 215 wird mit Dichtmittel beaufschlagt, während er zu einer Vorrichtung für die weitere Verarbeitung transportiert wird.

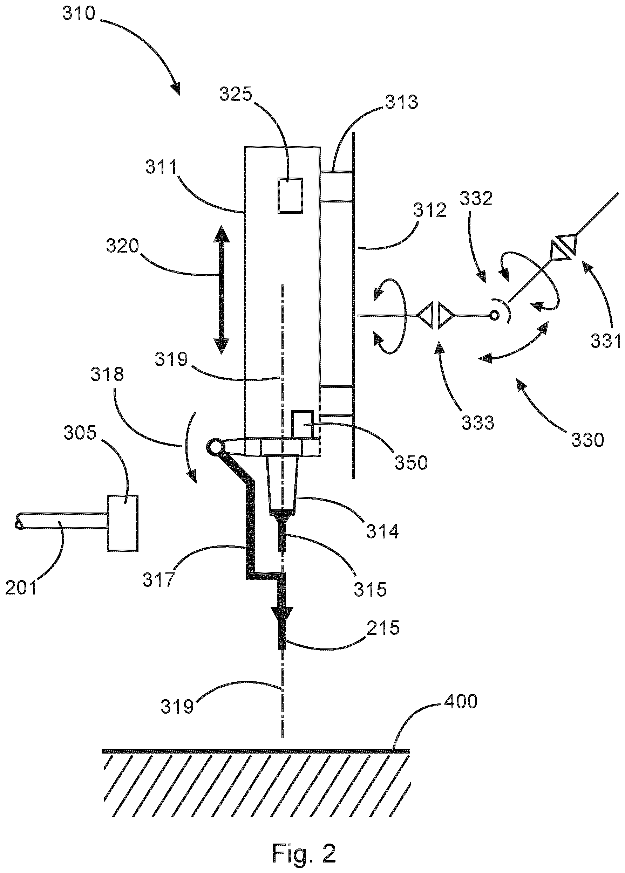

Fig. 2 zeigt einen Endeffektor 310 eines Montagewerkzeugs. Der Endeffektor 310 weist eine Bohrspindel 311 auf, welche in einer Bewegungsrichtung 320 entlang einer Bearbeitungsachse 319 auf ein zu bearbeitendes Werkstück 400 zu oder davon weg bewegbar ist. Die Bohrspindel 311 wird verwendet, um in das zu bearbeitende Werkstück 400 ein Loch zu bohren und den Verbinder 215 in das gebohrte Loch einzusetzen. Bei diesen beiden Schritten wird lediglich eine lineare Bewegung in beiden Richtungen 320 entlang der Bearbeitungsachse 319 ausgeführt und die Bohrspindel muss insbesondere nicht lateral entlang der Oberfläche des Werkstücks 400 neu positioniert werden.

Der Endeffektor 310 kann beispielsweise zusammen mit der Dichtmittelauftragstation 200 aus Fig. 2 verwendet werden. Der Verbinder 215 wird über das Schlauchsystem 201 von der Dichtmittelauftragstation 200 zu dem Endeffektor 310 transportiert. Das Ende des Schlauchsystems 201 läuft auf eine Übergabestation 305 auf. Hier wird der Verbinder 215 einem Vakuum-Setzfinger 317 zugestellt. Der Setzfinger 317 hält den Verbinder 215 mittels Unterdruck/Vakuum in Position. Der Setzfinger 317 kann unterschiedliche Verbinder aufnehmen und über eine Schwenkeinheit bzw. ein Gelenk 318 in eine Arbeitsposition des Setzfingers 317 bewegt werden.

Die Bohrspindel 311 weist eine Steuerung 325 und eine Sensoreinheiten 350 auf. Die Bohrspindel 311 ist über einen Schlitten 313 an einem Führungselement bzw. Führungsschienen 312 gekoppelt. Mittels einer (nicht gezeigten) Antriebseinheit, welche als Spindelantrieb ausgestaltet sein kann, kann die Bohrspindel 311 in beiden Richtungen 320 entlang der Bearbeitungsachse 319 bewegt werden. Bei dieser Bewegung bewegt sich die Bohrspindel auf das Werkstück 400 zu oder davon weg. Die Antriebseinheit wird von der Steuerung 325 gesteuert.

Die Bohrspindel weist ein Bohrfutter 314 und einen Bohrer 315 auf. Der Bohrer 315 ist so positioniert, dass seine Längsachse oder Mittelachse mit der Bearbeitungsachse 319 zusammenfällt. Vorliegend können beliebige Bohrer 315 verwendet werden, welche ausgestaltet sind, ein Loch in das Werkstück 400 zu bohren. Um ein Loch in das Werkstück 400 zu bohren, wird die Bohrspindel 311 in Richtung des Werkstücks 400 bewegt, bis der Bohrer eine gewünschte Tiefe in dem Werkstück 400 erreicht hat. Anschließend wird die Bohrspindel 311 entlang der Bearbeitungsachse 319 von dem Werkstück 400 linear wegbewegt, damit der Bohrer auf einen entsprechenden Abstand von der Oberfläche des Werkstücks 400 gebracht wird. Nun kann der Setzfinger 317 zusammen mit dem aufgenommenen Verbinder 215 in die Bearbeitungsposition einschwenken. In der Bearbeitungsposition ist der Verbinder 215 axial mit dem Bohrer 315 ausgerichtet und die Mittelachse des Verbinders 215 fällt mit der Mittelachse des Bohrers zusammen, wobei der Verbinder 215 entlang der Bearbeitungsachse 319 zwischen dem Bohrer und dem Werkstück angeordnet ist. Die Bohrspindel 311 kann mit dem so angeordneten Verbinder 215 erneut in Richtung des Werkstücks 400 bewegt werden, um den Verbinder 215 in das von dem Bohrer gebohrte Loch einzusetzen. Abschließend wird der Verbinder von dem Setzfinger freigegeben und die Bohrspindel wird an eine neue Arbeitsposition gebracht.

Die Bohrspindel 311 ist mit einer Kinematik 330 verbunden. Die Kinematik 330 ist ausgestaltet, die Bohrspindel 311 nach dem Ausführen der oben beschriebenen Schritte von der aktuellen Arbeitsposition an eine neue Arbeitsposition zu bringen. Während dieses Vorgangs kann die Sensoreinheiten 350 die Position der Bohrspindel 311 relativ zu dem Werkstück 400 erfassen und entsprechende Positionsinformationen an die Steuerung 325 übertragen. Die Steuerung 325 kann dann die Kinematik 330 entsprechend ansteuern, um die Bohrspindel an die gewünschte Arbeitsposition zu bringen, um dann dort erneut ein Loch zu bohren und einen Verbinder zu setzen.

Die Kinematik 330 ist beispielsweise eine Konstruktion mit mehreren Gelenken, die jeweils um mindestens eine Achse bewegbar sind. Die Kinematik 330 weist beispielsweise drei Gelenke 331, 332, 333 auf, die jeweils um eine Achse schwenkbar oder drehbar sind. Die Kinematik 330 kann selbstverständlich noch weitere nicht gezeigte Gelenke aufweisen, um die Bohrspindel 311 wie gewünscht zu platzieren.

Insbesondere wird darauf hingewiesen, dass die Kinematik 330 lediglich für das Anfahren einer neuen Arbeitsposition der Bohrspindel 311 verwendet wird. Als Arbeitsposition wird hierbei die Position der Bohrspindel entlang der Oberfläche des Werkstücks 400 verstanden, wobei diese Arbeitsposition insbesondere durch eine laterale Bewegung der Bohrspindel erreicht wird, was jedoch andere Bewegungsmuster der Kinematik 330 nicht ausschließt. Sobald die Bohrspindel 311 diese neue Arbeitsposition erreicht hat, erfolgt eine Bewegung der Bohrspindel 311 für das Bohren des Lochs in das Werkstück 400 und das Setzen des Verbinders 215 in die Bohrung lediglich entlang der Bearbeitungsachse 319, welche beispielsweise mit Bezug zu einer Oberfläche des Werkstücks 400 orthogonal verläuft.

Die Arbeitsweise des Endeffektors 310 kann zusammenfassend wie folgt beschrieben werden: eine mit Vakuum beaufschlagten Setzeinheit 317 übernimmt den Verbinder 215 aus dem Schlauchsystem 201. Bei diesem Schritt ist die Setzeinheit 317 in eine Position geschwenkt, dass sie seitlich von der Bohrspindel 311 abragt bzw. sich jedenfalls nicht zwischen dem Bohrer und dem Werkstück befindet. Aus dieser Position, in welcher die Setzeinheit 317 den Verbinder 215 aufnimmt, kann die Setzeinheit zwischen den Bohrer und das Werkstück geschwenkt werden, nachdem der Bohrer ein Loch in das Werkstück gebohrt hat. Das Schlauchsystem 201 führt den mit Dichtmittel beaufschlagten Verbinder 215 mit dem Kopf voraus bis zu der Übergabestation 305. An dieser Stelle übernimmt die Setzeinheit 317 den Verbinder 215. Der Verbinder, beispielsweise ein Niet, setzt mit dem Kopf auf der Setzeinheit 317 auf und wird mittels Unterdruck bzw. Vakuum an die Setzeinheit 317 angesaugt und gehalten. Sobald die Setzeinheit 317 den Verbinder angesaugt hat, wird die Übergabestation 305 von der Setzeinheit 317 wegbewegt, damit die Setzeinheit zusammen mit dem Verbinder eine Schwenkbewegung ausführen kann, um den Verbinder zwischen Bohrer und Werkstück zu bringen. Aus dieser Position kann der Verbinder orthogonal in das in dem Werkstück befindliche Bohrloch eingeführt werden, indem die Bohrspindel 311 entlang der Bearbeitungsachse 319 auf das Werkstück zubewegt wird. Das Vakuum in der Setzeinheit 317 wird nun gelöst, wodurch der Verbinder 215 freigegeben wird, und die Bohrspindel 311 wird von dem Werkstück wegbewegt und fährt die neue Arbeitsposition an.

Im Anschluss an diese Arbeitsschritte können mittels der Sensoreinheit 350 erfasste Messwerte und Maschinendaten an die Steuerung 325 übermittelt werden, um die Bohr- und Setzqualität einer Verbindung auszuwerten und darzustellen. Hierzu kann die Sensoreinheit beispielsweise einen Bewegungsverlauf der Bohrspindel entlang der Bearbeitungsachse 319 zusammen mit einer erforderlichen Antriebsleistung, um die Bohrspindel entlang der Bearbeitungsachse 319 zu bewegen, erfassen. Somit kann dargestellt werden, mit welcher Kraft das Loch gebohrt wurde und mit welcher Kraft der Verbinder in die Bohrung eingesetzt wurde. Aus diesen Daten können Rückschlüsse auf die Güte und Festigkeit der hergestellten Verbindung gezogen werden.

Die Sensoreinheit 350 kann auch verwendet werden, um nach dem Anfahren einer Arbeitsposition für die Bohrspindel eine Korrektur dieser Arbeitsposition vorzunehmen. Wenn die Kinematik 330 die Bohrspindel 311 an eine neue Arbeitsposition bringt, kann die Sensoreinheiten 350 die relative Position zwischen Bohrspindel und Oberfläche des Werkstücks erfassen und diese relative Position bei Bedarf korrigieren. Hierzu kann die Sensoreinheiten 350 beispielsweise einen Marker/Vorbohrung/Heftniet an der Oberfläche des Werkstücks 400 erfassen und dadurch auf die relative Position zwischen Bohrspindel und Werkstück schließen.

Die Bohrspindel kann einen oder mehrere Auslässe für Druckluft aufweisen, über welche bei der Annäherung der Bohrspindel an die Oberfläche des Werkstücks Druckluft ausgegeben wird, um die Oberfläche des Werkstücks von Verunreinigungen zu befreien. Die Verunreinigungen können von der Oberfläche des Werkstücks auch abgesaugt werden. Dieser Vorgang kann insbesondere nach dem Bohren eines Lochs in das Werkstück und vor dem Setzen des Verbinders in das gebohrte Loch ausgeführt werden.

Die Bohrspindel kann einen Fuß aufweisen, welcher bei dem Bohren eines Lochs und dem Setzen eines Verbinders in das Werkstück auf der Oberfläche des Werkstücks aufsetzt. Der Fuß kann beispielsweise mit pneumatischen Zylindern und/oder der Kinematik 330 auf die Oberfläche des Werkstücks gesetzt werden und eine Prozesskraft bzw. Haltekraft auf das Werkstück 400 ausüben, um das Werkstück 400 für die Schritte des Bohrens und Setzens des Verbinders 215 zu fixieren.

Die Bohrspindel kann relativ zu dem Fuß entlang der Bearbeitungsachse 319 bewegt werden, um das Loch zu bohren und den Verbinder zu setzen. Die Auslässe für Druckluft können auch so angeordnet sein, dass sie eine Auflagefläche des Fußes vor dem Aufsetzen auf der Oberfläche des Werkstücks reinigen.

Wenn die Bohrspindel 311 mit dem Spindelantrieb in Richtung des Werkstücks 400 bewegt wird, um das Loch zu bohren, ist ein Antrieb des Bohrers aktiviert. Nach dem Bohren des Lochs in das Werkstück 400 und beim Setzen des Verbinders in das Loch ist die Bohrspindel nicht aktiviert.

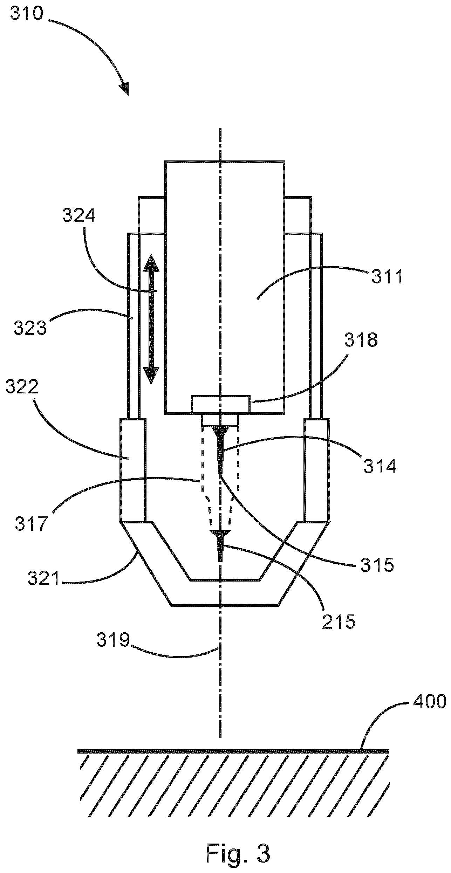

Fig. 3 zeigt eine schematische Darstellung eines Endeffektors 310 mit einem Druckfuß 321. Die Perspektive der Fig. 3 ist so gewählt, dass der Setzfinger 317 in Blickrichtung vorne ist, weshalb der Setzfinger 317 gestrichelt eingezeichnet ist. Hinsichtlich der Beschreibung der Bohrspindel 311, des Gelenks 318 mitsamt Setzfinger 317, des Bohrfutters 314 und des Bohrers 315, sowie der Funktion des Setzfingers 317 zum Platzieren des Verbinders 215 wird auf die bisherige Beschreibung verwiesen, insbesondere auf Fig. 2.

Der Druckfuß 321 ist in axialer Verlängerung der Bohrspindel 311 in Richtung des Werkstücks 400 angeordnet. Der Druckfuß 321 ist über einen Zylinder 322 mit einer Kolbenstange 323 gekoppelt. Mittels der Kolbenstange 323 kann der Druckfuß 321 entlang der Bearbeitungsachse 319 und entlang der Bewegungsrichtung 324 bewegt werden, um den Endeffektor 310 auf dem Werkstück 400 aufzusetzen und die oben beschriebenen Arbeitsschritte (bohren, Verbinder setzen) auszuführen. Der Druckfuß 321 setzt mit einer äußeren unteren Fläche auf dem Werkstück 400 auf. Die Bohrspindel 311 ist relativ zu der Kolbenstange 323, dem Zylinder 322 und dem Druckfuß 321 entlang der Bearbeitungsachse 319 in beiden Richtungen bewegbar, wie von dem Pfeil 324 angezeigt. Nachdem der Druckfuß 321 auf dem Werkstück aufgesetzt hat, bewegt sich die Bohrspindel 311 zu dem Werkstück, bohrt das Loch und platziert den Verbinder darin, wie weiter oben beschrieben. Der Druckfuß 321 ist an seiner unteren Fläche so ausgestaltet, dass der Bohrer und der Setzfinger mit dem Verbinder Zugang zu der Oberfläche des Werkstücks 400 haben, um das Loch an der vorgesehenen Position zu bohren und den Verbinder zu setzen.

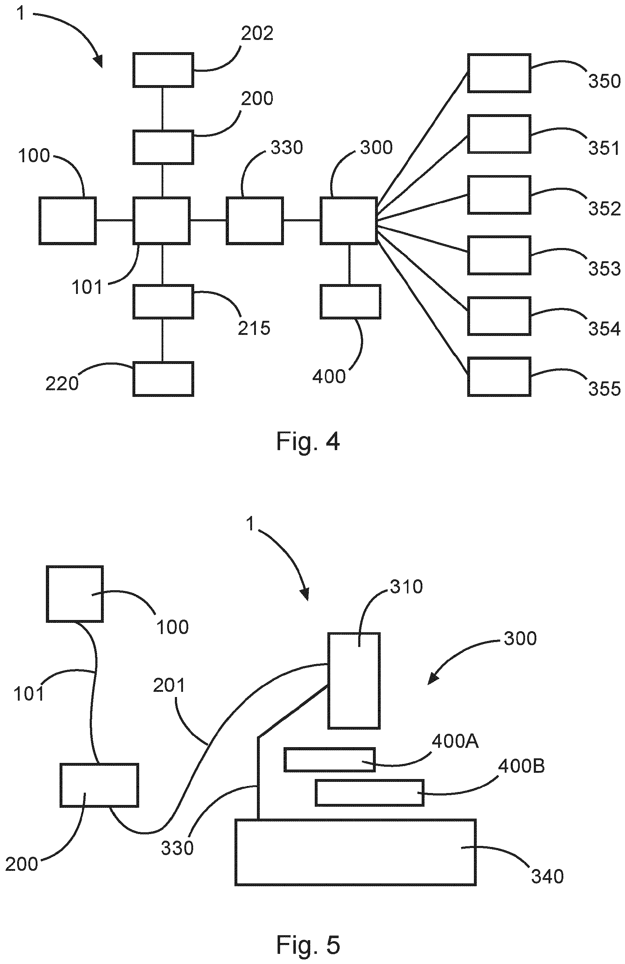

Fig. 4 ist eine schematische Darstellung der Funktionsblöcke eines Montagesystems 1 aufweisend eine Dichtmittelauftragstation 200 wie in Fig. 1 gezeigt und ein Montagewerkzeug 300 wie in Fig. 2 gezeigt.

Das Montagesystem 1 weist zunächst eine Vereinzelungsanlage 100 zum Bereitstellen von Verbindern auf. Die Verbinder 215 werden über ein Schlauchsystem 101 an die Dichtmittelauftragstation 200 geführt. Bei der Dichtmittelauftragstation 200 kommt der Verbinder 215 zunächst an der Übergabestation 202 an und wird den nachfolgenden Arbeitsschritten bereitgestellt. Insbesondere wird an der Dichtmittelauftragstation 201 Dichtmittel 220 auf den Verbinder 215 aufgetragen.

Die Kinematik 330 bewegt die Bohrspindel des Montagewerkzeugs 300 an eine gewünschte Arbeitsposition mit Bezug zu dem Werkstück 400. An dieser Arbeitsposition wird die Sensoreinheit 350 verwendet, um die Arbeitsposition mit Bezug zu dem Werkstück 400 bei Bedarf anzupassen. Anschließend erfolgt bei 351 die Ansteuerung des multifunktionalen Druckfußes 321 (siehe Fig. 3), um die Bohrspindel mit Bezug zu dem Werkstück 400 für das Bohren des Werkstücks 400 und Setzen des Verbinders 215 vorzubereiten. Bei 352 wird der Setzfinger 317 angesteuert, um einen Verbinder 215 aus der Übergabestation 305 aufzunehmen. Bei 353 wird die Bohrspindel 311 entlang der Bearbeitungsachse 319 bewegt, um ein Loch in das Werkstück 400 zu bohren und den Verbinder in das Loch einzusetzen. An dieser Stelle sei darauf hingewiesen, dass der Verbinder 215 an der Übergabestation 305 mit der Setzeinheit 317 aufgenommen werden kann, bevor oder nachdem die Bohrspindel 311 mit dem Bohrer 315 das Loch in das Werkstück 400 bohrt. Die Bohrspindel wird bei 354 gemäß den Vorgaben eines Prozesses angesteuert, um das Loch zu bohren und den Verbinder in das gebohrte Loch einzusetzen. Zuletzt werden bei 355 die mit der Sensoreinheit erfassten Prozessdaten an die Steuerung übermittelt und ausgewertet.

Die hier mit Bezugnahme auf die Funktionsblöcke 350 bis 355 beschriebenen Funktionen werden insbesondere als Verfahren von der Steuerung 325 ausgeführt.

Mit weiterer Bezugnahme zu Fig. 4 wird das Zusammenwirken zwischen Montagewerkzeug 300, Dichtmittelauftragstation 200 und Vereinzelungsanlage 100 beschrieben. Ein mit Druckluft beaufschlagtes Schlauchsystem 101 wird für die Zuführung der Verbinder 215 verwendet und transportiert die Verbinder 215 von der Vereinzelungsanlage 100 zu der Dichtmittelauftragstation 200. Die Vereinzelungsanlage 100 kann ausgestaltet sein, Verbinder 215 verschiedener Formen und Dimensionen bereitzustellen. Das Montagewerkzeug 300 fordert einen bestimmten Verbinder 215 bei der Vereinzelungsanlage 100 an. Die Vereinzelungsanlage 100 führt den angeforderten Verbinder über einen Revolver in das Schlauchsystem 101. Der angeforderte und bereitgestellte Verbinder wird mit dem Kopf in Förderrichtung hin orientiert dem Schlauchsystem 101 zugeführt. Der Transport des Verbinders 215 innerhalb des Schlauchsystems 101 findet mit Druckluft statt. Sodann wandert der Verbinder 215 durch die Dichtmittelauftragstation 200 und über das Schlauchsystem 201 zu dem Montagewerkzeug 300, wobei hier jeweils die mit Bezug zu Fig. 1 und Fig. 2 beschriebenen Arbeitsschritte ausgeführt werden.

Fig. 5 beschreibt ein Montagesystem 1 aufweisend die Dichtmittelauftragstation 200 wie in Fig. 1 gezeigt und den Endeffektor 310 wie in Fig. 2 gezeigt. Fig. 5 zeigt den strukturellen Aufbau des Montagesystems 1, wobei hier diejenigen Elemente gezeigt sind, welche den in Fig. 4 gezeigten Funktionsblöcken entsprechen.

Die Vereinzelungsanlage 100 stellt mehrere verschiedene Verbinder bereit, welche über das Schlauchsystem 101 an die Dichtmittelauftragstation 200 übergeben werden. An der Dichtmittelauftragstation 200 wird Dichtmittel auf einen Verbinder aufgetragen. Der mit Dichtmittel beaufschlagte Verbinder wird über einen einzelnen Schlauch 201 von der Dichtmittelauftragstation 200 zu dem Endeffektor 310 transportiert. Der Schlauch 201 ist ausgestaltet, Verbinder verschiedener Form und Dimensionen zu transportieren, so dass für unterschiedliche Verbinder lediglich ein einzelner Schlauch 201 verwendet wird. Der Endeffektor 310 bohrt ein Loch in die Komponenten 400A und 400B und verbindet diese Komponenten miteinander, indem ein Verbinder in das gebohrte Loch eingesetzt wird.

Die Komponenten 400A, 400B stellen das Werkstück dar, welches von dem Montagesystem bearbeitet wird. Die beiden Komponenten überlappen einander mindestens teilweise. Ein Druckfuß übt eine Prozesskraft auf mindestens eine der beiden Komponenten aus und der Endeffektor wird dann linear entlang der Bearbeitungsachse 319, wie mit Bezug zu Fig. 2 beschrieben, bewegt, um sowohl ein Loch in die beiden Komponenten zu bohren als auch den Verbinder in das gebohrte Loch einzusetzen. Während dieser Arbeitsschritte liegen die Komponenten 400A, 400B auf einem Montagetisch 340 oder entsprechendem Gegenhalter, welcher wiederum von einer zweiten Kinematik geführt und zugestellt wird. Beispielsweise kann der Gegenhalter ausgestaltet sein, eine Schraubmutter für den Verbinder mit einer Drehvorrichtung, die auch als automatic drilling unit, ADU, bezeichnet werden kann, aufzuschrauben, sodass der Gegenhalter einerseits eine Prozesskraft zum Klemmen von 400A und 400B aufbringen kann, sowie einen Verbinder mit einer Mutter versehen kann. Der Endeffektor 310 wird dann mittels der Kinematik 330 an eine neue Arbeitsposition gefahren, wenn an einer Stelle eine Verbindung zwischen den beiden Komponenten hergestellt wurde. Auch wenn Fig. 5 darstellt, dass die Kinematik 330 an dem Montagetisch 340 befestigt ist, kann die Kinematik 330 auch anderweitig befestigt sein.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Montagesystem

- 100: Vereinzelungsanlage
- 101: Schlauchsystem

- 200: Dichtmittelauftragstation
- 201: Schlauchsystem, z.B. pneumatischer Zuführ-Einheitsschlauch
- 202: Übergabestation
- 203: Antriebsriemen
- 204: Antriebseinheit
- 205: Greifer, z.B. Parallelbackengreifer
- 206: Greiffinger, z.B. Rechengreifer, einstellbar auf Verbinderdurchmesser
- 207: Rotationsrichtung
- 208: Dichtmittelauftragseinheit, Kartusche mit Kanüle
- 209: Richtung der Auspresskraft, radiale Richtung
- 210: bewegbare Halteeinheit
- 211: Übergabeeinheit
- 213: Montageblock
- 214: Abführöffnung
- 215: Verbinder
- 216: Bewegungsrichtung
- 217: Drehachse
- 218: Düse
- 219: Öffnung
- 220: Dichtmittel
- 230: Steuerung
- 240: Rotationseinheit
- 250: Sensoreinheit
- 300: Montagewerkzeug
- 305: Übergabestation
- 310: Endeffektor
- 311: Bohrspindel
- 312: Führungselement, Führungsschienen
- 313: Schlitten
- 314: Bohrfutter
- 315: Bohrer
- 317: Setzfinger
- 318: Gelenk (Schwenk- oder Rotationsgelenk)
- 319: Bearbeitungsachse
- 320: Bewegungsrichtung entlang Bearbeitungsachse
- 321: Druckfuß
- 322: Zylinder
- 323: Kolbenstange
- 324: Bewegungsrichtung
- 325: Steuerung
- 330: Kinematik
- 331: erstes Gelenk mit Achse
- 332: zweites Gelenk mit Achse
- 333: drittes Gelenk mit Achse
- 340: Montagetisch
- 350: Sensoreinheit mit Positionierung
- 351: Steuerung des multifunktionalen Druckfußes
- 352: Setzeinheit inkl. Rotationseinheit
- 353: Linearantrieb mit Spindelantrieb für Zustellung der Bohrspindel und Setzeinheit
- 354: Bohrspindeleinheit
- 355: Prozessdatenauswertung
- 400: Werkstück

## Patentansprüche

1. Montagewerkzeug (300) zum Verbinden von zwei Komponenten (400A, 400B), das Montagewerkzeug (300) aufweisend einen Endeffektor (310), welcher aufweist:
eine Bohrspindel (311) mit einem Bohrer (315), wobei die Bohrspindel ausgestaltet ist, den Bohrer (315) um eine Bearbeitungsachse (319) in Rotation zu versetzen;
einen Setzfinger (317), welcher ausgestaltet ist, einen Verbinder (215) aus einer Zuführung (201) aufzunehmen und in eine Bearbeitungsposition zu bringen;
wobei die Bohrspindel (311) ausgestaltet ist, in Längsrichtung entlang der Bearbeitungsachse (319) bewegt zu werden;
wobei der Setzfinger (317) ausgestaltet ist, um ein Gelenk (318) bewegt zu werden und den Verbinder (215) so zu positionieren, dass der Verbinder (215) axial mit dem Bohrer (315) ausgerichtet ist;
wobei die Bohrspindel (311) ausgestaltet ist, durch eine Bewegung entlang der Bearbeitungsachse (319) den Verbinder (215) in die Komponenten (400A, 400B) einzubringen und diese dadurch miteinander zu verbinden.

2. Montagewerkzeug (300) nach Anspruch 1,
wobei der Setzfinger (317) über ein Gelenk (318) mit der Bohrspindel (311) verbunden ist;
wobei das Gelenk (318) ausgestaltet ist, dass der Setzfinger (317) in die Bearbeitungsposition vor den Bohrer (315) geschwenkt und aus der Bearbeitungsposition herausgeschwenkt werden kann.

3. Montagewerkzeug (300) nach einem der Ansprüche 1 oder 2,
wobei das Gelenk (318) eine Schwenkbewegung um eine einzelne Achse erlaubt.

4. Montagewerkzeug (300) nach einem der voranstehenden Ansprüche,
wobei der Verbinder (215) und der Bohrer (315) in der Bearbeitungsposition auf einer gemeinsamen Achse liegen und auf dieser gemeinsamen Achse hintereinander angeordnet sind.

5. Montagewerkzeug (300) nach Anspruch 4,
wobei die gemeinsame Achse des Verbinders (215) und des Bohrers (315) parallel zu der Bearbeitungsachse (319) verläuft oder mit dieser zusammenfällt.

6. Montagewerkzeug (300) nach einem der voranstehenden Ansprüche,
weiterhin aufweisend eine Kinematik (330) in Form eines Schwenkarms;
wobei die Bohrspindel (311) an der Kinematik (330) angeordnet ist.

7. Montagewerkzeug (300) nach einem der voranstehenden Ansprüche,
weiterhin aufweisend eine Steuerung (325) und eine Sensoreinheit (350);
wobei die Sensoreinheit (350) ausgestaltet ist, eine relative Position der Bohrspindel (311) bezogen auf die zu verbindenden zwei Komponenten (400A, 400B) zu erfassen und an die Steuerung (325) zu übertragen;
wobei die Steuerung (325) ausgestaltet ist, eine Bewegung der Bohrspindel (311) basierend auf der erfassten relativen Position der Bohrspindel (311) bezogen auf die zu verbindenden Komponenten (400A, 400B) zu veranlassen.

8. Montagesystem (1), aufweisend:
ein Montagewerkzeug (300) nach einem der Ansprüche 1 bis 7;
eine Dichtmittelauftragstation (200) zum Beaufschlagen eines Verbinders (215) mit Dichtmittel zum Fügen eines Werkstücks (400).

9. Montagesystem (1) nach Anspruch 8,
wobei die Dichtmittelauftragstation (200) aufweist:
eine Zuführung (101), welche ausgestaltet ist, der Dichtmittelauftragstation (200) einen Verbinder (215) zuzuführen;
eine Abführung (201), welche ausgestaltet ist, den Verbinder (215) von der Dichtmittelauftragstation (200) abzuführen;
eine Halteeinheit (210), welche angeordnet ist, den Verbinder nach dem Zuführen über die Zuführung (101) zu halten;
einen Greifer (205), welcher ausgestaltet ist, den von der Halteeinheit (210) gehaltenen Verbinder (215) zu greifen;
eine Antriebseinheit (204), welche ausgestaltet ist, den Greifer (205) um eine Drehachse (217) zu drehen (207);
eine Dichtmittelauftragseinheit (208), welche ausgestaltet ist, ein Dichtmittel auf den Verbinder (215) aufzutragen, während die Antriebseinheit (204) den Greifer (205) um die Drehachse (217) dreht;
wobei die Halteeinheit (210) bewegbar ist, um eine Abführöffnung (214) freizugeben, nachdem die Dichtmittelauftragseinheit (208) den Verbinder (215) mit einem Dichtmittel beaufschlagt hat

10. Montagesystem (1) nach Anspruch 8 oder 9,
wobei die Dichtmittelauftragstation (200) mit dem Montagewerkzeug (300) zum Zuführen eines Verbinders (215) mit einem einzelnen Zuführschlauch (201) verbunden ist;
wobei der einzelne Zuführschlauch (201) ausgestaltet ist, Verbinder (215) mit unterschiedlichen Abmessungen an das Montagewerkzeug zuzuführen.
